# EUROPÄISCHE PATENTSCHRIFT

(11) **EP 3 910 326 B1**
(45) Veröffentlichungstag und Bekanntmachung des Hinweises auf die Patenterteilung: **25.12.2024**
(21) Anmeldenummer: 20174239.2
(22) Anmeldetag: 12.05.2020
(51) Int. Cl.: G01N 22/00, G01F 23/284, H01Q 1/00

(54) **SYSTEM ZUR ERKENNUNG UND/ODER VOLUMENBESTIMMUNG VON KÖRPERN ODER STOFFEN AUS DIELEKTRISCHEM UND/ODER LEITFÄHIGEM MATERIAL**
SYSTEM FOR DETECTING AND / OR DETERMINING THE VOLUME OF BODIES OR MATERIALS MADE FROM DIELECTRIC AND / OR CONDUCTIVE MATERIAL
SYSTÈME DE DÉTECTION ET/OU DE DÉTERMINATION DU VOLUME DES CORPS OU DES SUBSTANCES EN MATÉRIAU DIÉLECTRIQUE ET/OU CONDUCTEUR

(43) Veröffentlichungstag der Anmeldung: 17.11.2021
(73) Patentinhaber: Rechner Industrie-Elektronik GmbH, 68623 Lampertheim (DE)
(72) Erfinder: Wegner, Tim, 98693 Ilmenau (DE); Gebhardt, Stefan, 68623 Lampertheim (DE); Kohler, Armin, 68623 Lampertheim (DE); Bischler, Eduard, 68623 Lampertheim (DE)
(74) Vertreter: Blumbach · Zinngrebe Patentanwälte PartG mbB

(56) Entgegenhaltungen:
- WO-A1-2016/011530
- WO-A1-2017/037516
- DE-A1- 10 049 995
- DE-A1- 10 149 851
- DE-B4- 102006 019 688
- JALILVAND M ET AL: "Broadband miniaturised bow-tie antenna for 3D microwave tomography", ELECTRONICS LETTERS, IEE STEVENAGE, GB, vol. 50, no. 4, 13 February 2014 (2014-02-13), pages 244 - 246, XP006046766, ISSN: 0013-5194, DOI: 10.1049/EL.2013.3974
- YOUNG-GON KIM ET AL: "Design of bow-tie-type UWB antennas using an ultra-wideband balun", ANTENNAS AND PROPAGATION INTERNATIONAL SYMPOSIUM, 2007 IEEE, IEEE, PISCATAWAY, NJ, USA, June 2007 (2007-06-01), pages 1989 - 1992, XP031169557, ISBN: 978-1-4244-0877-1, DOI: 10.1109/APS.2007.4395913
- KOENIG R: "ZUR BESCHRÄNKUNG DES ANSPRUCHSINHALTS DURCH"BAR"-DERIVATE", MITTEILUNGEN DER DEUTSCHEN PATENTANWAELTE, HEYMANN, KOLN, DE, 1 January 1997 (1997-01-01), pages 62, XP001248632, ISSN: 0026-6884

## Beschreibung

Die Erfindung betrifft ein System zur Erkennung und/oder Volumenbestimmung von Körpern oder Stoffen aus dielektrischem und/oder leitfähigem Material innerhalb eines Innenraums einer Messzelle, insbesondere in Art eines Behälters, mit einer leitfähigen und/oder nichtleitfähigen Messzellenwand, die eine in den Innenraum gerichtete Oberfläche aufweist.

Insbesondere auch im Zuge des Trends zur intelligenten Fabrik als Teil des Zukunftsprojekts Industrie 4.0 kommen auf produzierende Unternehmen erhebliche Aufgaben zu. So wird u.a. eine größere Flexibilität gefordert, die Produkte müssen individualisierbar sein, und gleichzeitig werden die Erzeugnisse und Herstellungsprozesse komplexer. Auch gehen mit der individuellen Fertigung geringere Produktionsmengen ab Losgröße 1 einher, die flexiblere Produktionsanlagen notwendig machen. Um auch bei kleinen Verbrauchsmengen und dynamischen Prozessen eine gleichbleibend hohe Produktionsqualität zu erreichen, müssen alle relevanten Regelgrößen permanent zur Verfügung stehen. Dazu zählen auch die Füllmengen und Materialverteilungen von Flüssigkeiten, Viskosestoffen und rieselfähigen Schüttgütern in einer zunehmenden Anzahl von kleinen Vorrats- und Prozessbehältem, die kontinuierlich sensorisch erfasst werden müssen.

So werden beispielsweise zukünftig auch Sensoren gefordert sein, die Informationen zu volumenhaften Füllgutverteilung berührungslos liefern und/oder für Füllstandmessungen durch Materialschichtungen hindurch geeignet sind.

Füllstandmessungen werden heutzutage mit verschiedensten Messverfahren realisiert, wobei grundsätzlich zwischen Grenzstandmessung und kontinuierlicher Messung unterschieden wird. Bei Grenzstandmessungen werden üblicherweise mehrere Sensoren an definierten Höhenpositionen in die Behälterwand oder vertikal von oben eingebaut, sodass diese meist nur der Vermeidung von Überfüllung oder Leerlauf dienen.

Kontinuierliche Füllstandmessungen liefern dagegen wesentlich dezidiertere Informationen und sind beispielsweise dann vorteilhaft, wenn mehrere Grenzstände über der Füllhöhe generiert werden sollen. Bei kontinuierlichen Füllstandsensoren unterscheidet man bekannter Weise zwischen produktberührenden und berührungslos messenden Sensoren. Bei den produktberührenden Sensoren erstrecken sich bei allen Typen die Messelektroden über eine festgelegte Füllhöhe in dem Behälter und haben dabei stets Kontakt zum Füllgut, d.h. sie müssen den Umweltbedingungen im Behälter genügen. Komplizierte Behältergeometrien, wie z.B. Ecken, Schrägen, Änderung des Durchmessers, oder auch Einbauten, wie z.B. Befüll-ZHeizvorrichtungen und/oder Rührwerke, atmosphärische Störeinflüsse sowie chemische und physikalische Eigenschaften des Mediums, wie z.B. Viskosität, Dampf, Schaum, Reaktivität, Dichteänderung, können die Messung beeinträchtigen oder sogar unmöglich machen.

Idealerweise sollte daher jede Messung von außen stattfinden, zumindest ohne Kontakt zum Füllgut. Berührungslos messende Sensoren arbeiten beispielsweise auf Basis von Ultraschall, Mikrowellen, Radiometrie oder mit Radar. Beim Pulsradar werden beispielsweise kurze Impulse von oben in den Behälter geschickt und wenn diese auf die Grenzfläche des Mediums auftreffen, wird ein Teil der Energie reflektiert und kann als Echo detektiert werden. Aus der Laufzeit des aufgefangenen Signals wird dann der Abstand zum Sensor bestimmt und mit der angegebenen Behälterhöhe letztendlich der Füllstand errechnet. Um möglichst nur Reflexionen der Füllgutoberfläche zu erfassen, werden traditionell Radarsysteme mit einer möglichst schmalen Strahlenkeule verwendet. Damit kommen jedoch üblicherweise stark bündelnde Antennen zur Anwendung, die jedoch nur bei hohen Frequenzen zu praktikablen Baugrößen führen und dann auch nur einen kleinen Bereich der Oberfläche detektieren können, was bei vorhandenen Schüttkegeln zu erheblichen Unterschieden zwischen Messwert und tatsächlicher Füllmenge führen kann. Aufgrund der in der Regel schmalen Strahlenkeulen bzw. kleinen Öffnungswinkel heutiger Radarsensoren werden außerhalb der Strahlenkeule in der Regel Schüttkegel nicht erfasst und können folglich zu einer erheblichen Differenz zwischen gemessenem Füllstand und tatsächlicher Füllmenge führen. Auch besitzen diese Sensoren einen Totbereich, insbesondere im antennennahen Feldbereich, in dem die Messgenauigkeit signifikant abnimmt und das vorhandene Behältervolumen also nur unvollständig genutzt werden kann.

Die DE 10 2006 019 688 B4 beschreibt beispielsweise zur sensorischen Füllstanderfassung eine planare Antenne für ein Füllstandradar, wobei zur Prozesstrennung eine Glas- oder Keramikscheibe vorgesehen ist, auf deren Rückseite, d.h. auf der vom sensorisch zu erfassenden Füllstandbereich abgewandten Seite, wenigstens ein planares Strahlerelement aufgebracht ist und beabstandet hiervon, auch auf der vom sensorisch zu erfassenden Füllstandbereich abgewandten Seite ferner eine Metallwand als Massefläche für das Strahlerelement vorgesehen ist. Die durch das wenigstens eine Strahlerelement aufgebrachte planare Antennenstruktur ist hierbei aus einem leitfähigen Material und kann ein einzelner Patchstrahler oder ein Array aus mehreren Einzelpatches sein. Hiermit wird ein elektromagnetisches Hochfrequenz-Sendesignal mit einer Wellenlänge λ erzeugt und durch die Scheibe hindurch zum Füllgut abgestrahlt, welche zur Minimierung der Störung eine Dicke von einem Vielfachen von λ/2 aufweist. Zur Maximierung der Bandbreite der Antenne kann sich überdies zwischen der Massefläche und der Antennenstruktur ein Gas, z. B. Luft, oder ein Vakuum mit niedriger Dielektrizitätskonstante befinden. Ferner ist gemäß DE 10 2006 019 688 B4 vorgesehen, dass auch eine solche, zusätzlich mit Prozesstrennung ausgebildete planare Antenne wiederum insbesondere Verwendung innerhalb einer Hornantenne oder zum Einbau in einen Hohlleiter findet.

Abgesehen von der somit in der DE 10 2006 019 688 B4 vorgeschlagenen berührungslosen Messung, bei welcher sich zumindest alle elektronischen Komponenten der Sensoren außerhalb des sensorisch zu erfassenden Füllstandbereichs befinden, wäre jedoch weiterhin und insbesondere zur Füllgut- oder Objektdetektion in komplexeren Behälterstrukturen, eine breitere Strahlenkeule somit wesentlich vorteilhafter.

DE10049995 offenbart ein Füllstandsmeßgerät mit einer Antenne, mit einer planaren Antennenstruktur. Die Antenne ragt in einen Behälter hinein und dient dazu Mikrowellen in Richtung des Füllgutes zu senden und an einer Füllgutoberfläche reflektierte Mikrowellen zu empfangen.

Aus dem Fachartikel "Broadband miniaturised bow-tie antenna for microwave tomography", M. Jalilvand et al, ELECTRONIC LETTERS, 13th February 2014, Vol. 50 No. 4 pp. 244-246, ist eine miniaturisierte Breitbandantenne für ein dreidimensionales Mikrowellen-Bildgebungssystem basierend auf einem Tomographie-Konzept für medizinische Zwecke bekannt. Die offenbarte Antenne ist so konzipiert, dass sie mit einem numerischen Modellansatz ("forward solver") modelliert werden kann, was auch experimentell verifiziert ist. Durch Verbinden bzw. Kurzschließen der beiden Arme der gezeigten miniaturisierten bow-tie Antenne lässt sich diese im Frequenzbereich von 0,85 bis 3,2 GHz betreiben. Dadurch, dass die Antenne durch eine Balun-Struktur gespeist wird, wird erreicht, dass ihre Strahlung mit derjenigen einer ideal gespeisten Antenne vergleichbar ist.

Auch der Fachartikel "Design of bow-tie-type UWB antennas using an ultra-wideband balun", Young-Gon Kim et al, ANTENNAS AND PROPAGATION INTERNATIONAL SYMPOSIUM, 2007 IEEE, Juni 2007, Seiten 1989-1992, offenbart eine Ultrabreitband-Antenne, die ebenfalls vom bow-tie Typ ist und von einer Balun-Anordnung gespeist wird. Die beschriebene Antenne weist eine gemessene Frequenzbandbreite von 3,2 bis 11,2 GHz auf. Es wird in diesem Fachartikel im Wesentlichen eine Schaffung eines neuen Designs für eine solche Antenne vorgeschlagen.

Eine Aufgabe der Erfindung ist es daher, eine berührungslose Messung innerhalb einer Messzelle dahingehend zu verbessern, dass auch geometrisch-komplizierte Messzellen-Volumen im Wesentlichen vollständig und also insbesondere ohne Totbereiche in Bezug auf Körper oder Stoffe bei kostengünstigem Aufbau detektierbar sind.

Die Lösung der Erfindung ist durch ein System mit den Merkmalen nach Anspruch 1 gegeben. Zweckmäßige Weiterbildungen sind Gegenstand der Untersprüche.

Erfindungsgemäß ist somit zur Erkennung und/oder Volumenbestimmung von Körpern oder Stoffen aus dielektrischem und/oder leitfähigem Material innerhalb eines Innenraums einer Messzelle, insbesondere in Art eines Behälters, mit einer leitfähigen und/oder nicht leitfähigen Messzellenwand, die eine in den Innenraum gerichtete Oberfläche aufweist, ein System vorgesehen, das wie folgt eingerichtet ist.

Es umfasst eine Ultrabreitband-Mikrowelleneinheit und wenigstens eine Ultrabreitband-Antenne mit wenigstens einem scheibenförmigen Trägersubstrat, das eine zu einer ersten Seite gerichtete erste Oberfläche und eine entgegengesetzt zur ersten Oberfläche gerichtete zweite Oberfläche besitzt, die eine Außenseite der Antenne bildet, von welcher sich ein Messfeld erstreckt. D.h., die zur ersten Seite gerichtete erste Oberfläche befindet sich zweckmäßig auf der vom sensorisch zu erfassenden Füllstandbereich abgewandten Seite. Das System ist derart konfiguriert, dass das Trägersubstrat in die Messzellenwand einbaubar und derart ausgestaltet ist, dass durch dieses Trägersubstrat ein Teil der in den Innenraum der Messzelle gerichteten Oberfläche der Messzellenwand ersetzbar ist. Anstelle des Einbaus in die Messzellenwand ist das Trägersubstrat im Innenraum der Messzelle beabstandet vor der Messzellenwand anordenbar. Das erfindungsgemäße System ist ferner dadurch gekennzeichnet, dass die Ultrabreitband-Antenne mit an der ersten Oberfläche des Trägersubstrats oder im Trägersubstrat angeordneten Strahlerelementen als eine elektrisch kurze Antenne mit einer zumindest im Wesentlichen halbkugelförmigen Strahlungscharakteristik zum Abdecken des Messfelds, welches ein volumenhaftes Messfeld für eine volumenhafte Messung ist, eingerichtet ist. Die Erfindung sieht weiterhin vor, dass die Ultrabreitband-Mikrowelleneinheit ein Auswertemodul zur Auswertung eines empfangenen Ultrabreitbandsignals aufweist, welches geeignet ist, von den erkannten und/oder der Volumenbestimmung unterzogenen Körpern oder Stoffen direkt und/oder durch Reflexion, insbesondere an der Messzellenwand, erhaltene Empfangssignale auszuwerten.

Von Vorteil ist somit, dass mit den durch Einsatz der Ultrabreitband-Mikrowelleneinheit und -Antenne nutzbaren Ultrabreitbandsignalen und also bei großer Bandbreite und gleichzeitig kleinen Mittenfrequenzen insbesondere im einstelligen 30 GHz-Bereich besonders gut verschiedenste Materialien durchdrungen werden können, welches einerseits eine volumenhafte Messung unterstützt und andererseits die technischen Anforderungen der hierzu notwendigen Elektronik minimiert. Die hierdurch erhaltenen Messsignale können dann durch nachgeordnete digitale Algorithmen anwendungsbedingt verarbeitet und insbesondere ausgewertet werden. Mit anderen Worten, können durch die weg von der Ultrabreitband-Elektronik hin zu digitalen Algorithmen verlagerte Signalauswertung mit dem erfindungsgemäßen System Messungen bis hin zum Boden und in die verschiedensten Bereiche einschl. Ecken einer Messzelle, d.h. insbesondere bis zum Behälterboden und bis in die Ecken eines Behälters, insbesondere unter Berücksichtigung von Laufzeit- und Signalformanalysen, insbesondere auch bei Vorhandensein von Mehrfachreflexionen des Messfeldes, äußerst genau durchgeführt werden.

Da ferner das Trägersubstrat der Ultrabreitbandantenne einen Teil der in den Innenraum gerichteten Oberfläche der Messzellwand ersetzt oder sich im Innenraum beabstandet von der Messzellenwand erstreckt und die daran oder darin angeordneten Strahlerelemente eine zumindest im Wesentlichen halbkugelförmige Strahlungscharakteristik besitzen, können Totbereiche im Wesentlichen vollständig vermieden werden und das System kann somit auch für Messungen im Nahbereich der Antenne eingesetzt werden.

Es hat sich ferner gezeigt, dass besonders zweckmäßige Strahlungscharakteristika einrichtbar sind, wenn das System zwei am oder im Trägersubstrat angeordnete planare Strahlerelemente besitzt, die sich im Wesentlichen parallel zum Trägersubstrat erstreckend von diesem in einer gemeinsamen Ebene gehalten sind und zusammen einen Flächendipol ausbilden. Von Vorteil ist, dass es sich bei den Strahlerelementen grundsätzlich um beliebige Formen handeln kann, um eine Vielzahl von möglichen Antennenstrukturen auszubilden, wie beispielsweise Kreis-, Ellipsen- und Ringstrukturen oder auch Schmetterlingsstrukturen, Fliegenstrukturen, d.h. "Bow Tie"-Strukturen, und sogenannte Batwing-Strukturen. Mit diesen Strahlerelementen ist dann zweckmäßig ein Koaxialleiteranschluss verbunden, mit welchem auch die Ultrabreitband-Mikrowelleneinheit verbunden ist, und zwar zum leitungsgebundenen Übertragen eines Ultrabreitbandsignals zwischen den Strahlerelementen und der Ultrabreitband-Mikrowelleneinheit.

In weiterer besonders bevorzugter Ausführung sieht die Erfindung ferner vor, dass das System horizontal und/oder vertikal parallel zu den zwei planaren Strahlerelementen mit wenigstens zwei weiteren planaren Strahlerelementen eingerichtet ist, wobei jeweils zwei dieser wenigstens zwei weiteren planaren Strahlerelemente sich im Wesentlichen parallel zum Trägersubstrat erstreckend von diesem in jeweils einer gemeinsamen Ebene zueinander gehalten sind, und zusammen einen Flächendipol ausbilden.

Hierbei ist in bevorzugter Weiterbildung vorgesehen, dass auch mit diesen jeweils zwei weiteren, einen Flächendipol ausbildenden Strahlerelementen ein Koaxialleiteranschluss zum leitungsgebundenen Übertragen eines Ultrabreitbandsignals zwischen diesen Strahlerelementen und der auch mit diesem Koaxialleiteranschluss verbundenen Ultrabreitband-Mikrowelleneinheit verbunden ist. Von Vorteil ist, dass die zwei planaren Strahlerelementen und die jeweils wenigstens zwei weiteren planaren Strahlerelementen über denselben Koaxialleiteranschluss oder auch unterschiedliche Koaxialleiteranschlüsse verbunden sein können, so dass mit solchen weiteren Flächendipolen anwendungsspezifisch eine Vielzahl von individuell unterschiedlichen bi-statischen und mono-statischen Antennenstrukturen ausbildbar sind.

Zweckmäßigerweise ist jeder Koaxialleiteranschluss jeweils über wenigstens ein Anpassglied, insbesondere zur Impedanzwandlung, zweckmäßig einen Balun-Übertrager umfassend, mit den jeweils einen Flächendipol ausbildenden Strahlerelementen verbunden.

Ferner ist in ergänzender und/oder alternativer Ausführung vorgesehen, dass die Ultrabreitband-Antenne eine vom Trägersubstrat aus betrachtet zu der ersten Seite hin, d.h. insbesondere auf der vom sensorisch zu erfassenden Füllstandbereich abgewandten Seite, und zum Trägersubstrat beabstandet angeordnete Abschirmung umfasst. Eine Wellenausbreitung des Ultrabreitbandsignals in diese Richtung kann somit auf einfache Weise vermieden und die Feldausbreitung hinter der Antenne minimiert werden.

Hierbei ist insbesondere vorgesehen, dass die Abschirmung nicht mit der Ultrabreitband-Mikrowelleneinheit verbunden ist und/oder, dass die Abschirmung durch eine metallische Messzellenwand oder durch einen Deckel der Ultrabreitband-Antenne direkt ausgebildet ist.

Bei Verwendung eines Anpassgliedes und einer Abschirmung ist ferner gemäß einer bevorzugten Weiterbildung vorgesehen, dass das Anpassglied zwischen der Abschirmung und dem Trägersubstrat angeordnet ist.

Ergänzend und/oder alternativ zur Abschirmung kann auch eine benachbart zum Trägersubstrat zur ersten Seite gerichteten Oberfläche hin als Schutzschicht eine nichtleitfähige Schicht, insbesondere zur Abdeckung, und/oder eine Absorberschicht, insbesondere zur elektromagnetischen Absorption, angeordnet sein. Mit wenigstens einer solchen zur Abdeckung und/oder Absorption ausgebildeten Schicht lassen sich somit auf einfache Weise zusätzliche Reflexionen an rückseitigen Schichten, insbesondere auch massegeerdeten Schichten vermeiden.

In diesem Fall ist gemäß einer zweckmäßigen Ausführung das Anpassglied in die Schutzschicht eingebettet.

Es hat sich ferner als besonders zweckmäßig erwiesen, wenn die Ultrabreitband-Mikrowelleneinheit für ein kontinuierlich-periodisches Signal als Ultrabreitbandsignal eingerichtet ist, wobei sich als besonders zweckmäßig ein ultrabreitbandiges M-Sequenzsignal gezeigt hat, also insbesondere ein pseudo-kodiertes bzw. pseudozufälliges Maximal- bzw. Rauschfolgen-signal.

Darüber hinaus besitzt die Ultrabreitband-Mikrowelleneinheit zumindest ein Sendemodul zum Generieren des Ultrabreitbandsignals und kann in zweckmäßiger Ausführung auch ein Auswertemodul zum Auswerten eines empfangenen UltraBreitbandsignals umfassen.

Gemäß einer bevorzugten Ausgestaltung ist ferner vorgesehen, dass das System mit wenigstens einer weiteren Ultrabreitband-Antenne gemäß vorgeschriebenen Merkmalen eingerichtet ist, wobei diese wenigstens eine weitere Ultrabreitband-Antenne zumindest mit einem Auswertemodul zum Auswerten eines empfangenen Ultrabreitbandsignals verbunden ist.

Folglich können auch mehrere Ultrabreitband-Antennen mit jeweils wenigstens einem Trägersubstrat, das einen Teil der in den Innenraum gerichteten Oberfläche der Messzellenwand ersetzt, oder sich im Innenraum und beabstandet vor der Messzellenwand erstreckt, eingesetzt werden, und zwar insbesondere zum Auswerten eines empfangenen Ultrabreitbandsignals an verschiedenen Orten innerhalb der Messzelle.

Als Trägersubstrat kann zweckmäßig auch eine mehrlagige Platine eingesetzt sein und/oder die Strahlerelemente können in dem Substrat eingebettet sein.

Weitere Vorteile und Merkmale der Erfindung ergeben sich aus der nachfolgenden Beschreibung einiger bevorzugter Ausführungsformen unter Bezugnahme auf die beigefügten Zeichnungen. Die Zeichnungen zeigen jeweils skizzenhaft in stark vereinfachter nicht maßstabstreuer Darstellung:
- Fig. 1: eine erste Ausführungsform eines erfindungsgemäßen Systems zur Erkennung und/oder Volumenbestimmung von Körpern oder Stoffen in einem beliebig strukturierten Behälter als Beispiel einer möglichen Messzelle,
- Fig. 2: eine zweite Ausführungsform eines erfindungsgemäßen Systems zur Erkennung und/oder Volumenbestimmung von Körpern oder Stoffen in einem beliebig strukturierten Behälter als Beispiel einer möglichen Messzelle,
- Fig. 3: eine dritte Ausführungsform eines erfindungsgemäßen Systems zur Erkennung und/oder Volumenbestimmung von Körpern oder Stoffen in einem beliebig strukturierten Behälter als Beispiel einer möglichen Messzelle,
- Fig. 4: in Draufsicht eine erste Ausführungsform einer Dipolantenne für den Einsatz innerhalb eines Systems gemäß der Erfindung,
- Fig. 5: in Querschnittsansicht eine zweite Ausführung einer Dipolantenne mit eingebetteten Strahlerelementen für den Einsatz innerhalb eines Systems gemäß der Erfindung,
- Fig. 6: in Draufsicht eine dritte Ausführung einer Dipolantenne, insbesondere für bi-statische Messungen für den Einsatz innerhalb eines Systems gemäß der Erfindung,
- Fig. 7: in Querschnittsansicht eine vierte Ausführung einer Dipolantenne mit eingebetteten Strahlerelementen für den Einsatz innerhalb eines Systems gemäß der Erfindung,
- Fig. 8: in Querschnittsansicht eine fünfte Ausführung einer Dipolantenne mit eingebetteten Strahlerelementen und rückseitiger Abschirmung für den Einsatz innerhalb eines Systems gemäß der Erfindung,
- Fig. 9: in Querschnittsansicht eine sechste Ausführung einer Dipolantenne mit eingebetteten Strahlerelementen für den Einsatz innerhalb eines Systems gemäß der Erfindung,
- Fig. 10: in Querschnittsansicht eine siebte Ausführung einer Dipolantenne mit eingebetteten Strahlerelementen für den Einsatz innerhalb eines Systems gemäß der Erfindung für den Einsatz innerhalb eines Systems gemäß der Erfindung,
- Fig. 11: im Querschnitt ein Messsystem nach dem Stand der Technik mit bündelnden Hochfrequenzantennen bei der Füllstanderfassung in einem Behälter,
- Fig. 12: im Querschnitt das Messsystem nach dem Stand der Technik mit bündelnden Hochfrequenzantennen bei der Objekterfassung in einem Behälter, und
- Fig. 13: im Querschnitt das Messsystem nach dem Stand der Technik mit bündelnden Hochfrequenzantennen bei der Objekterfassung in einem anderen Behälter.

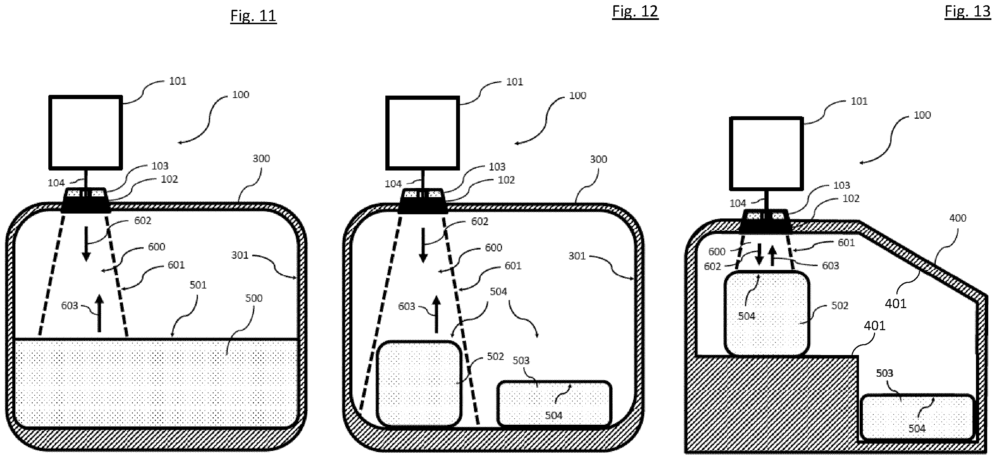

Nachfolgend wird zur weiteren Beschreibung einiger bevorzugter Ausführungsformen der Erfindung auf die Figuren Bezug genommen, wobei zur verbesserten Gegenüberstellung der erfindungsgemäßen Systeme zunächst kurz auf die in den Fign. 11 bis 13 dargestellten Systemen eingegangen wird, welche Messsysteme nach dem Stand der Technik mit bündelnden Hochfrequenzantennen bei der Füllstand- und Objekterfassung in verschiedenen Behältern zeigen.

Insbesondere zeigen die in den Fign. 11 bis 13 im Querschnitt dargestellten Systeme jeweils ein Füllstandradar 100 mit Hochfrequenzstrahlen bündelnden Antennen (oder eine Antenne) 102. Die jeweilige Antennenstruktur der bündelnden Antenne 102 kann hierbei aus einem nicht näher dargestellten leitfähigen Material sein und insbesondere und aus einem einzelnem Patchstrahler oder einem Array aus mehreren Einzelpatches aufgebaut sein, wie beispielsweise in der DE 10 2006 019 688 B4 beschrieben. Die bündelnden Antennen 102 sind jeweils mit einer rückseitig angeordneten, d.h. auf der vom sensorisch zu erfassenden Füllstandbereich abgewandten Seite, mit einer Massefläche bzw. Reflektorschicht 103 elektrisch leitend verbunden, wobei ein Hochfrequenzanschluss 104 von der bündelnden Antenne 102 zu einer Mikrowellenelektronik 101 führt. Gemäß der Fign. 11 und 12 ist jeweils ein "quader-" oder auch "zylinderförmiger" Behälter 300 mit einer Behälterwand 301 dargestellt, durch welchen eine Messzelle definiert ist. D. h., die Behälterwand 301 bildet die Messzellenwand aus, sodass die in den Innenraum gerichteten Oberfläche der Behälterwand 301 letztlich den sensorisch zu erfassenden Füllstandbereich definiert. Ein solcher Füllstandbereich ist folglich im Wesentlichen "hohlquader-" oder auch "hohlzylinderförmig" ausgebildet. In Abwandlung zu den Fign. 11 und 12 ist bei Fig. 13 kein lediglich "quader-" oder auch "zylinderförmiger" Behälter, sondern ein Behälter 400 mit einer im Wesentlichen beliebigen Struktur, insbesondere beliebig komplexen Struktur, gezeigt, der folglich auch eine dieser beliebigen Struktur folgende Behälterwand 401 umfasst. Eine hierdurch definierte Messzelle definiert und also auch der durch die in den Innenraum gerichtete Oberfläche der Behälterwand 401 definierte, sensorisch zu erfassende Füllstandbereich ist folglich auch nicht lediglich "hohlquader-" oder auch "hohlzylinderförmiger" ausgebildet, sondern kann Absätze, Ecken, Schrägen und dergleichen umfassen.

Ein jeweils mittels der bündelnden Antenne 102 erzeugtes Messfeld 600 ist gleichermaßen in den Fign. 11 bis 13 skizziert. Wie zu sehen, ist das erzeugte Messfeld 600 ein gebündeltes Messfeld und weist folglich insbesondere eine entsprechend gebündelte Richtkeule 601 auf, die den Bereich eingrenzen, in dem ein Sendesignal 602 mit einer bestimmten Mindestfeldstärke erzeugt bzw. ein Empfangssignal 603 mit einer bestimmten Mindestsignalstärke empfangen werden kann.

Befindet sich im Behälter 300 gemäß Fig. 11 als Füllgut 500 beispielsweise eine Flüssigkeit oder ein Schüttgut, sodass sich der Füllstandbereich und sich also das Innere der Messzelle im Wesentlichen homogen vom Boden aufwärts mit der Flüssigkeit oder dem Schüttgut füllt, kann folglich über die jeweilige Füllgutoberfläche 501 auch eine Füllstanderfassung mit dem bei Fig. 11 gezeigten Messsystem nach dem Stand der Technik im Wesentlichen zufrieden stellend durchgeführt werden, da in einem solchen Fall einer homogenen Füllgutverteilung eine gebündelte Richtkeule 601 in der Regel keine negative Auswirkungen auf das Messergebnis hat.

Befinden sich im Behälter 300 gemäß Fign. 12 und 13 als Füllgut jedoch mehrere Körper oder Stoffe, wie z.B. die mit 502 und 503 gekennzeichneten, die den Füllstandbereich und also das Innere der Messzelle nicht homogen vom Boden aufwärts füllen oder im Innern der Messzelle verteilt voneinander angeordnet sind, kann folglich die gebündelte Richtkeule 601 dazu führen, dass lediglich ein Teil der Körper oder Stoffe bzw. nur einzelne Körper oder Stoffe innerhalb des Bereichs der Richtkeule sensorisch erfasst, d.h. erkannt werden können, bei den Fign. 12 und 13 z.B. nur der mit 502 gekennzeichnete Körper. Aber auch eine in Bezug auf einen erkannten Körper basierende Füllstandmessung bzw. gemäß Fign. 12 und 13 eine Volumenbestimmung kann bei diesen Ausführungsbeispielen bereits zu unterschiedlichen Ergebnissen führen. Liegt nämlich wie bei Fig. 12 zu sehen, z.B. der Körper 502 auf dem Boden des dort "quader-" oder auch "zylinderförmiger" ausgebildeten Behälters und reicht Messfeld 600 innerhalb der Richtkeule 601 um den Körper 502 herum bis auf den Behälterboden, so kann anhand der sensorisch erfassten Körperoberfläche 504 des Körpers 502 zusätzlich zur reinen Erkennung des Körpers in der Regel auch eine Volumenbestimmung des Körpers mit entsprechender Elektronik durchgeführt werden. Befindet sich hingegen der Körper im Nahfeldbereich der Antenne, wie z.B. der Körper 502 bei Fig. 13, wird folglich mit dem bei Fig. 13 gezeigten Messsystem nach dem Stand der Technik nur ein Teil des Körpers 502 erfasst. Folglich kann zwar anhand der sensorisch erfassten Körperoberfläche 504 des Körpers 502 der Körper 502 grundsätzlich erkannt, jedoch in der Regel keine Volumenbestimmung des Körpers mehr durchgeführt werden. Negativ ergänzend wirkt sich darüber hinaus aus, wenn der Körper, wie z.B. der Körper 502 bei Fig. 13 nicht auf dem Boden eines lediglich "quader-" oder auch "zylinderförmiger" ausgebildeten Behälters liegt, sondern z.B. auf einem Absatz oder auch auf anderen einzeln unter dem Körper befindlichen weiteren verteilt angeordneten Körpern. Die sensorisch erfassten Körperoberfläche 504 des Körpers 502 kann nämlich in einem solchen Fall eine unkorrekte Füllstandhöhe widerspiegeln. Der bei den Fign. 12 und 13 außerhalb der Richtkeule 601 befindliche Körper 503 kann indessen überhaupt nicht erfasst werden, insbesondere da auch dessen Körperoberfläche 504 nicht mehr mittels des Messfeldes 600 sensorisch erfasst wird.

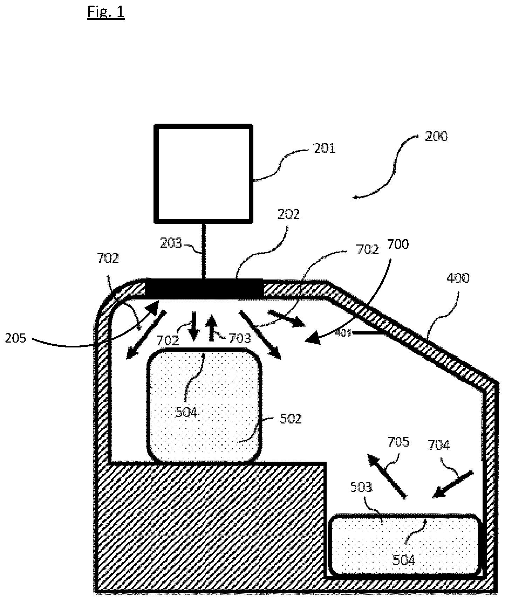

Im Gegensatz hierzu zeigen die Fign. 1 bis 3 in stark vereinfachter Darstellung verschiedene Messsysteme nach gemäß der Erfindung. Insbesondere sind drei unterschiedliche Ausführungsformen eines erfindungsgemäßen Systems 200 zur Erkennung und/oder Volumenbestimmung von Körpern oder Stoffen in einem beliebig strukturierten Behälter als Beispiel einer möglichen Messzelle 400 skizziert.

Wie nachfolgend ersichtlich, eignet sich ein solches erfindungsgemäßes System 200 zur Erkennung und/oder Volumenbestimmung von Körpern oder Stoffen aus dielektrischem und/oder leitfähigen Material 500, 502, 503, 504 innerhalb eines Innenraums der Messzelle 400, und also insbesondere in Art eines Behälters, mit einer leitfähigen und/oder nichtleitfähigen Messzellenwand 401, die eine in den Innenraum gerichtete Oberfläche aufweist. Auch in den vorliegenden Ausführungsbeispielen bildet somit die Behälterwand die Messzellenwand 401 aus, sodass die in den Innenraum gerichtete Oberfläche der Behälterwand letztlich den sensorisch zu erfassenden Füllstandbereich definiert. Eine solche oder ähnliche Messzelle und also auch der im Innern der Messzelle sensorisch zu erfassende Füllstandbereich ist folglich in der Regel auch nicht lediglich "hohlquader-" oder auch "hohlzylinderförmiger" ausgebildet, sondern kann Absätze, Ecken, Schrägen und dergleichen umfassen, wie dies auch in den Fign. 1 bis 3 zu sehen ist.

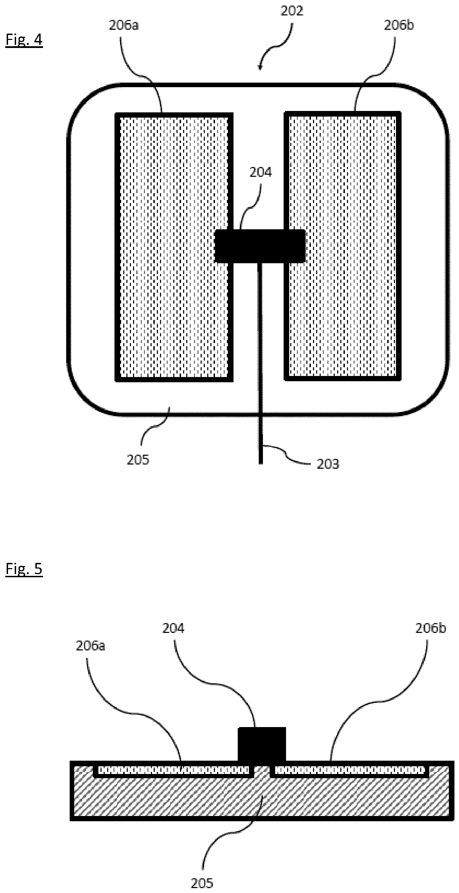

Das System gemäß der Erfindung besitzt hierbei eine Ultrabreitband-Mikrowelleneinheit 201 und wenigstens eine Ultrabreitband-Antenne 202. Diese ist in praktischer Ausführung mit der Ultrabreitband-Mikrowelleneinheit 201 verbunden. Bestandteil der Ultrabreitband-Antenne 202 ist wenigstens ein scheibenförmiges Trägersubstrat mit einer zu einer ersten Seite gerichteten ersten Oberfläche und einer entgegengesetzten ersten Oberfläche gerichteten zweiten Oberfläche. Diese zweite Oberfläche bildet eine Außenseite der Antenne und das Trägersubstrat 205 ist derart angeordnet und vorgesehen, bei Betrieb, das heißt insbesondere nach Befestigung der Ultrabreitband-Antenne an der Messzelle, wie beispielsweise in den Fign. 1 bis 3 angedeutet, einen Teil der in den Innenraum gerichteten Oberfläche der Messzellenwand zu ersetzen. Alternativ kann das Trägersubstrat, jedoch auch beabstandet vor der Messzellenwand, sich im Innenraum erstrecken. Wie beispielsweise den Fign 4 bis 10 zu entnehmen, sind am oder im Trägersubstrat 205 Strahlerelemente 206a, 206b, 207a, 207b angeordnet und zwar derart, dass diese als eine elektrisch kurze Antenne mit einer zumindest im Wesentlichen halbkugelförmigen Strahlungscharakteristik eingerichtet sind, um ein volumenhaftes Messfeld 700, wie den Fign 1 bis 3 beispielhaft zu entnehmen, abzudecken.

Bekanntermaßen handelt es sich um eine elektrisch kurze Antenne, wenn der elektrische Leiter der Antenne viel kleiner als die halbe Betriebswellenlänge λ ist: Im vorliegenden Fall, d.h. bei Einsatz einer Ultrabreitband-Mikrowelleneinheit und -Antenne und den damit nutzbaren Ultrabreitbandsignalen, d.h. bei Signalen insbesondere innerhalb eines Frequenzbereichs zwischen 0,1 bis 6 GHz, bewegen sich die Wellenlängen bei Betrieb ungefähr im Bereich zwischen 30dm bis 5cm, Je nach gewünschter Anwendung bewegt sich eine halbe Betriebswellenlänge folglich bevorzugt zwischen 15dm bis 2,5cm und der elektrische Leiter bzw. die Leiterstruktur der die Antenne ausmachenden Strahlerelemente ist entsprechend möglichst anzupassen. Insbesondere ist vorgesehen, dass der elektrische Leiter bzw. die Leiterstruktur der Strahlerelemente gemäß Definition aus "Lehrbuch der Hochfrequenztechnik", erster Band, zweite Auflage Seite 261, Kapitel 6.2.2, aus 1973, ISBN 3-540-05974-1, zur Einrichtung einer elektrisch kurzen Antenne kleiner als oder gleich λ/8 ist.

Wie bereits erläutert, sind Ultrabreitbandsignale mit niedrigen Frequenzen vorgesehen, um besonders gut verschiedenste dielektrische Materialien durchdringen zu können. Außerdem sind für kleine Messzellen entsprechend kleine Antennen mit Strahlerelementen im Zentimeterbereich erforderlich und vorgesehen. Bei Betrachtung des gesamten nutzbaren Frequenzbereichs handelt es sich damit definitionsgemäß um elektrisch kurze Antennen, die keine oder eine geringe Richtwirkung aufweisen und damit zweckmäßig eine volumenhafte Feldausbreitung bzw. Messung unterstützen,

Mit anderen Worten, sind die am oder im Trägersubstrat 205 angeordneten Strahlerelemente 206a, 206b, 207a, 207b eingerichtet, zum Abdecken eines volumenhaften Messfeldes 700 über einen Raumwinkel von wenigstens 2π.

Hierdurch können im Gegenstand zum vorbeschriebenen Stand der Technik mit einem System gemäß der Erfindung auch in geometrisch komplexen Messzellen und also geometrisch komplexen, sensorisch zu erfassenden Füllstandbereichen Totbereiche im Wesentlichen vollständig vermieden werden und es kann somit auch für Messungen, insbesondere Radarmessungen, zur Erkennung und/oder Volumenbestimmung von Körpern oder Stoffen im Nahbereich der Antenne eingesetzt werden.

Insbesondere, wenn das Trägersubstrat sich bei Betrieb beabstandet vor der Messzellenwand im Innenraum erstreckt, haben sich auch Strahlungscharakteristik als besonders bevorzugt gezeigt, mit denen ein volumenhaftes Messfeld 700 über einen Raumwinkel von weit mehr als 2π bis hin zu 4π abdeckbar ist und die Strahlungscharakteristik also bis hin zu einer vollkugelförmigen Strahlungscharakteristik reicht.

Auch beim Messsystem 200 gemäß der Erfindung führt von der Ultrabreitband-Antenne 202 wiederum zweckmäßig ein Hochfrequenzanschluss 203 zur Ultrabreitband-Mikrowelleneinheit 201, zum leitungsgebundenen Übertragen eines Ultrabreitbandsignals zur Ultrabreitband-Mikrowelleneinheit 201, d.h. insbesondere ein mit den Strahlerelementen verbundener Koaxialanschluss zum leitungsgebundenen Übertragen des Ultrabreitbandsignals zwischen den Strahlerelementen und der Ultrabreitband-Mikrowelleneinheit 201.

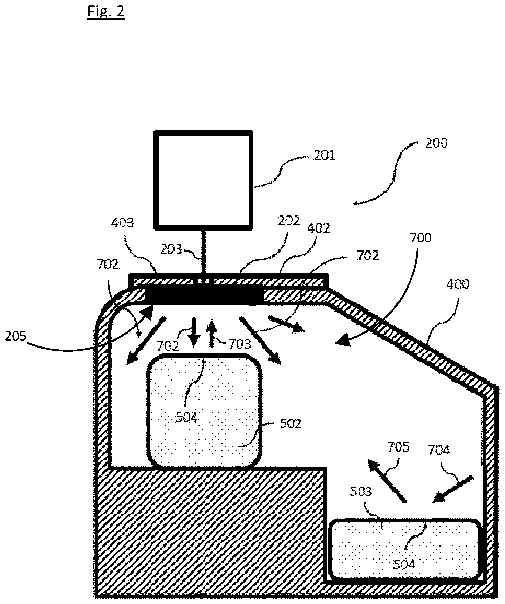

Befinden sich folglich in einer Messzelle 400 mit Absätze, Ecken, Schrägen und dergleichen, also beispielsweise im Behälter gemäß Fig. 1 oder 2, der eine ähnliche, d.h. beliebig komplexe Struktur wie der Behälter nach Fig. 13 besitzt, als Füllgut jedoch mehrere Körper oder Stoffe, wie z.B. wiederum die mit 502 und 503 gekennzeichneten, die den Füllstandbereich und also das Innere der Messzelle nicht homogen vom Boden aufwärts füllen oder im Innern der Messzelle verteilt voneinander angeordnet sind, können folglich aufgrund des Abdeckens des volumenhaften Messfeldes 700 über einen Raumwinkel von wenigstens 2π, anhand der sensorisch erfassten Körperoberflächen 504 sowohl des Körpers 502 und auch des Körpers 503 auch die mehreren Körper oder Stoffe erkannt und/oder, insbesondere je nach applikationsspezifischer weiterer Ausgestaltung von zur Signalauswertung eingesetzten digitalen Algorithmen, in deren jeweiligen Volumen bestimmt werden. Auch können, wie in den Fign. skizziert, mit Hilfe der zumindest im Wesentlichen halbkugelförmigen Strahlungscharakteristik der erfindungsgemäßen Ultrabreitband-Antenne somit Totbereiche im Wesentlichen vollständig vermieden werden und das System 200 kann somit auch für Messungen im Nahbereich der Antenne eingesetzt werden.

Zum Generieren des für die Messung eingesetzten Ultrabreitbandsignals besitzt die Ultrabreitband-Mikrowelleneinheit folglich zweckmäßig ein in den Figuren aus Gründen der Übersichtlichkeit nicht näher dargestelltes Sendemodul und/oder zum Auswerten eines empfangenen Ultrabreitbandsignals zweckmäßig ein gleichermaßen in den Figuren aus Gründen der Übersichtlichkeit nicht näher dargestelltes Auswertemodule.

Beispielhafte Sendesignale sowie auch an der Messzellenwand reflektierte Sendesignale innerhalb des volumenhaften Messfeldes 700 sind in den Fign. 1 und 2 mit 702 bzw. 704 gekennzeichnet und beispielhafte Empfangssignale sowie auch an der Messzellenwand reflektierte Empfangssignale sind mit 703 bzw. 705 gekennzeichnet.

Mit dem erfindungsgemäßen System können folglich Messungen, insbesondere Radarmessungen bis hin zum Boden und in die verschiedensten Bereiche einschl. Ecken einer Messzelle, d.h. insbesondere bis zum Behälterboden und bis in die Ecken eines Behälters, zweckmäßiger Weise einschl. unter Nutzung reflektierter Signale durchgeführt und unter Berücksichtigung von Laufzeitanalysen und Mehrfachreflexionen, äußerst genau, insbesondere unter Verwendung digitaler Algorithmen ausgewertet werden. Es sei jedoch hierbei angemerkt, dass die Signalauswertung selbst, insbesondere unter Einsatz entsprechender Algorithmen nicht Gegenstand der Erfindung ist und folglich nicht weiter diskutiert wird.

Allerdings sei ferner darauf hingewiesen, dass die Ultrabreitband-Antenne 202 nicht zwingend als Sende- und Empfangsantenne ausgebildet sein muss. So ist im Rahmen der Erfindung insbesondere auch vorgesehen, dass das System mit wenigstens einer weiteren Ultrabreitband-Antenne eingerichtet ist, so dass eine erste der Antennen als Sendeantenne und eine oder auch mehrere weitere Antenne(n) als Empfangsantennen eingerichtet sind. Insbesondere in diesem Fall ist diese wenigstens eine weitere Ultrabreitband-Antenne zumindest mit einem Auswertemodul zum Auswerten eines empfangenen Ultrabreitbandsignals verbunden. Bei diesem Auswertemodul handelt es sich in bevorzugter Weise um das vorstehend in Bezug auf die Ultrabreitband-Mikrowelleneinheit bereits erwähnte Auswertemodul, wobei auch mehrere Auswertemodule zur gemeinschaftlichen Signalauswertung miteinander verbunden sein können. Alternativ können auch mehrere Antennen als Sendeantennen eingerichtet sein und lediglich eine oder auch mehrere der weiteren Antenne(n) als Empfangsantenne.

Ferner alternativ können auch mehrere Antennen als Sende- und Empfangsantennen eingerichtet sein oder in weiterer Alternative mehrere Antennen als Sende- und Empfangsantennen eingerichtet sein und eine oder mehrere Antennen als Empfangsantennen.

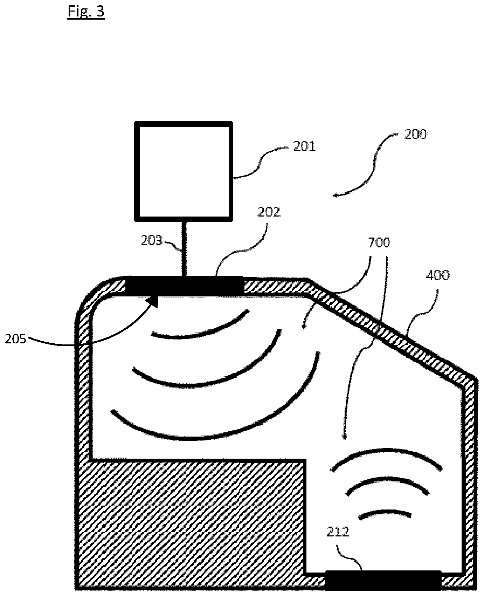

Infolge dessen kann das System gemäß Erfindung somit auch mehre Ultrabreitband-Antennen mit jeweils einem Trägersubstrat, das nach Befestigung der jeweiligen Ultrabreitband-Antenne an einer anderen Stelle der Messzelle dort einen Teil der in den Innenraum gerichteten Oberfläche der Messzellenwand ersetzt, oder sich dort im Innenraum und beabstandet vor der Messzellenwand erstreckt, eingesetzt werden. Mit somit an verteilten Orten der Messzelle am oder im jeweiligen Trägersubrat angeordneten Strahlerelementen kann folglich eine Radarmessung mit Stützpunkten an verschiedenen Orten innerhalb der Messzelle durchführt werden, welches der möglichen Strukturkomplexität der sensorisch zu erfassenden Füllstandbereiche bei der Anwendbarkeit des erfindungsgemäßen Gegenstandes im Wesentlichen keine Grenzen mehr setzt. Ein einfaches Beispiel von an verteilten Orten der Messzelle befestigten Ultrabreitband-Antennen ist der Fig. 3 zu entnehmen, bei welcher zusätzlich zur Ultrabreitband-Antenne 202, ähnlich wie bei den Fign. 1 und 2 eine solche weitere Ultrabreitband-Antenne 212 eingesetzt ist. Es sei erwähnt, dass auch eine Vielzahl n solcher oder ähnlich weiterer Ultrabreitband-Antennen 212 im Rahmen der Erfindung einsetzbar sind

Nachfolgend wird insbesondere auf einzelne bevorzugte Ausführungsformen in Verbindung mit am oder im Trägersubstrat 205 angeordneten Strahlerelementen eingegangen, welche mit einem, wie vorstehend bereits erwähnten Koaxialleiteranschluss als Hochfrequenzanschluss 203 verbunden sind, der zum leitungsgebundenen Übertragen eines Ultrabreitbandsignals zwischen den Strahlerelementen und der Ultrabreitband-Mikrowelleneinheit 201 auch mit dieser verbundenen ist.

Wie beispielsweise mit Fig. 4 anhand einer ersten Ausführungsform einer Dipolantenne in Draufsicht skizziert, sind zweckmäßig zumindest zwei planare Strahlerelemente 206a, 206b am oder im Trägersubstrat 205 der Ultrabreitband-Antenne 202 angeordnet. Die planaren Strahlerelemente 206a, 206b erstrecken sich im Wesentlichen parallel zum Trägersubstrat 205, sind vom Trägersubstrat 205 in einer gemeinsamen Ebene gehalten, d.h. insbesondere eine durch die planaren Strahlerelemente aufgespannte gemeinsame planare Ebene erstreckt sich folglich im Wesentlichen parallel zu einer vom Trägersubstrat aufgespannten Ebene, und bilden zusammen einen Flächendipol aus. Aufgrund der Ausbildung der Antenne als elektrisch kurze Antenne, ist ein entsprechend ausgebildeter Flächendipol folglich nicht an die Anregungsfrequenzen angepasst. Auch besitzen die Strahlerelemente somit zweckmäßig ferner eine horizontale Ausdehnung zur Trägersubstratebene.

Wie ferner angezeigt bei Fig. 4, ist der Hochfrequenzanschluss 203 zweckmäßig ferner über ein Anpassglied 204 mit den diesen Flächendipol ausbildenden Strahlerelementen 206a, 206b verbunden. Hierdurch lassen sich insbesondere Impedanzwandlungen zwischen dem leitungsgebundenen unsymmetrischen Übertragungsweg der Ultrabreitbandsignale und den damit einhergehenden elektromagnetischen Signalwellen des symmetrischen Flächendipols sowie dem im Innenraum der Messzelle basierenden, also insbesondere auf dem Medium Luft basierenden oder allgemein gesagt leitungsungebundenen Übertragungsweg der Ultrabreitbandsignale und den damit einhergehenden elektromagnetischen Signalwellen applikationsspezifisch vornehmen, wie es an und für sich für einen Fachmann bekannt ist. So beträgt z.B. die Wellenimpedanz typischer Koaxialkabel 50Ω und die Impedanz des Flächendipols unterscheidet sich davon frequenzabhängig signifikant. Ein Anpassglied 204, in bevorzugter Ausführung z.B. einen breitbandigen Balun-Übertrager umfassend, ist folglich in der Regel zweckmäßig, um beim Übergang zwischen den leitungsgebundenen, elektromagnetischen Signalwellen und dem Flächendipol entsprechende Anpassungen in Bezug auf die Wellenimpedanz der Leitung vorzunehmen.

Die Ultrabreitband-Antenne 202 gemäß Fig. 4 kann folglich als Sende- und Empfangsantenne ausgebildet sein und zwar insbesondere monostatisch. In diesem Fall ist die Ultrabreitband-Antenne 202 und also gemäß vorliegendem Beispiel die beiden Strahlerelementen 206a, 206b somit zweckmäßig mit einem von der Ultrabreitband-Mikrowelleneinheit umfassten Sendemodul zum Generieren eines für die Messung eingesetzten Ultrabreitbandsignals und gleichzeitig mit einem Auswertemodul zum Auswerten eines empfangenen Ultrabreitbandsignals verbunden, welches jedoch aus Gründen der Übersichtlichkeit nicht näher dargestellt ist.

Alternativ oder in Ergänzung hierzu skizziert Fig. 5 in Querschnittsansicht eine Ausführung einer Dipolantenne mit im Trägersubstrat 205 eingebetteten Strahlerelementen 206a, 206b für den Einsatz innerhalb eines Systems gemäß der Erfindung.

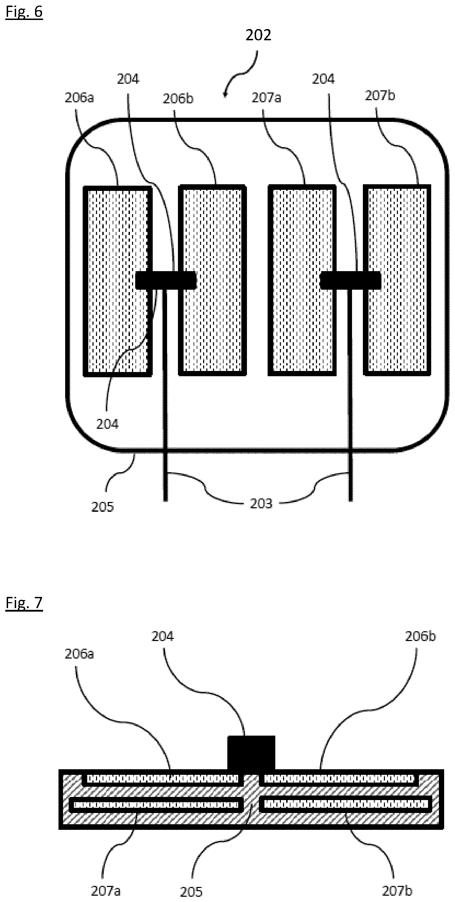

In Abwandlung zu den Fign. 4 und 5 skizziert Fig. 6 in Draufsicht eine Ausführung einer Dipolantenne, insbesondere für bi-statische Messungen für den Einsatz innerhalb eines Systems gemäß der Erfindung. Ergänzend zu den zwei planaren Strahlerelementen 206a, 206b, und zwar horizontal parallel zu diesen zwei planaren Strahlerelementen 206a, 206b sind wenigstens zwei weitere planare Strahlerelemente, im dargestellten Beispiel zwei weitere planare Strahlerelemente 207a, 207b von der Ultrabreitband-Antenne 202 umfasst. Jeweils zwei 207a, 207b solcher wenigstens zwei weiteren planaren Strahlerelemente sich hierbei im Wesentlichen parallel zum Trägersubstrat 205 erstreckend von diesem in jeweils einer gemeinsamen Ebene zueinander gehalten sind und auch zusammen einen Flächendipol ausbilden, Wie zu sehen, sind im dargestellten Beispiel mit den jeweils zwei weiteren, einen Flächendipol ausbildenden Strahlerelementen ein insbesondere als Koaxialleiteranschluss ausgebildeter Hochfrequenzanschluss 203 zum leitungsgebundenen Übertragen eines Ultrabreitbandsignals zwischen diesen Strahlerelementen 207a, 207b und der folglich in zweckmäßiger Weise auch mit diesem Hochfrequenzanschluss verbundenen Ultrabreitband-Mikrowelleneinheit (nicht dargestellt) verbunden. Da ferner in dem dargestellten Beispiel jeweils ein eigener Hochfrequenzanschluss 203 mit den Strahlerelementen 206a, 206b sowie mit den Strahlerelementen 207a, 207b verbunden ist, und zwar wiederum in zweckmäßiger Ausbildung jeweils über ein separates Anpassglied 204, kann die Ultrabreitband-Antenne 202 in diesem Fall somit insbesondere auch für bi-statische Messung eingerichtet sein, d.h. zwei der einen Flächendipol ausbildenden Strahlerelemente, z.B. die Strahlerelemente 206a, 206b sind zum Aussenden eines für die Messung eingesetzten Ultrabreitbandsignals eingerichtet und somit zweckmäßig zumindest mit einem Sendemodul zum Generieren des für die Messung eingesetzten Ultrabreitbandsignals verbunden und zwei andere, einen Flächendipol ausbildenden Strahlerelemente, z.B. die Strahlerelemente 207a, 2067 sind zum Empfangen des für die Messung eingesetzten Ultrabreitbandsignals eingerichtet und somit zweckmäßig zumindest mit einem Auswertemodul zum Auswerten des empfangenen Ultrabreitbandsignals verbunden. Wie ferner ersichtlich können sich hierbei die jeweils einen gemeinsamen Flächendipol ausbildenden Strahlerelemente ein gemeinsames Trägersubstrat teilen, d.h. sie sind am oder im selben Trägersubstrat 205 angeordnet. Alternativ käme jedoch auch die Anordnung auf grundsätzlich einem geteilten Trägersubstrat in Betracht, d.h. die einen gemeinsamen Flächendipol ausbildenden Strahlerelemente sind jeweils auf einem Teil-Trägersubstrat angeordnet.

Ähnlich zur Fig. 5 skizziert Fig. 7 in Querschnittsansicht eine weitere Ausführung einer Dipolantenne mit im Trägersubstrat 205 eingebetteten Strahlerelementen für den Einsatz innerhalb eines Systems gemäß der Erfindung. In weiterer Abwandlung zur Fig. 5 und auch zur Fig. 6 sind beim Ausführungsbeispiel gemäß Fig. 7 jedoch ergänzend zu den zwei planaren Strahlerelementen 206a, 206b, und zwar vertikal parallel zu diesen zwei planaren Strahlerelementen 206a, 206b, wenigstens zwei weitere planare Strahlerelemente, im dargestellten Beispiel die zwei weiteren planaren Strahlerelemente 207a, 207b von der Ultrabreitband-Antenne 202 umfasst. Auch diese beiden weiteren planaren Strahlerelemente werden hierbei sich im Wesentlichen parallel zum Trägersubstrat 205 erstreckend von diesem in jeweils einer gemeinsamen Ebene zueinander gehalten und bilden jeweils zusammen grundsätzliche einen Flächendipol aus. Da im dargestellten Beispiel alle vier dargestellten jeweils zwei 207a, 207b solcher wenigstens zwei weiteren planaren Strahlerelemente in das Trägersubstrat 205 eingebettet gezeigt sind, ist ersichtlich, dass ein solches Trägersubstrat 205 beispielsweise auch als mehrlagige Platine ausgebildet sein kann. Dies hat z.B. auch den Vorteil eine vertikal parallel zueinander gewünschte Einbettung von Strahlerelementen auf einfache Weise herstellen zu können. Eine mehrlagige Platine als Trägersubstrat 205 kann jedoch selbstverständlich auch ohne eingebettete Strahlerelemente zum Einsatz kommen.

Ferner kann bei einer Ausführungsform nach Fig. 7 gemäß einer Variante vorgesehen sein, dass jeweils ein eigener Hochfrequenzanschluss 203 mit den Strahlerelementen 206a, 206b sowie mit den Strahlerelementen 207a, 207b verbunden ist, und zwar wiederum in zweckmäßiger Ausbildung jeweils über ein separates Anpassglied 204, welches aus Gründen der Überschaubarkeit jedoch nicht dargestellt ist. In einer alternativen Variante kann jedoch auch vorgesehen sein, dass die Strahlerelemente 206a, 206b und die Strahlerelemente 207a, 207b mit einem gemeinsamen Hochfrequenzanschluss 203 verbunden sind. Hierbei wird zweckmäßig jedes Strahlerelement 206a, 206b, die zusammen einen Flächendipol ausbilden, mit jeweils einem anderen, der zusammen einen weiteren Flächendipol ausbildenden Strahlerelemente 207a, 207b elektrisch verbunden. Gemäß Fig. 7 also insbesondere das Strahlerelement 206a mit dem Strahlerelement 207a und das Strahlerelement 206b mit dem Strahlerelement 207b. Auch diese Variante ist aus Gründen der Überschaubarkeit jedoch nicht dargestellt.

Die jeweilige applikationsspezifische Einrichtung einer Ultrabreitband-Antenne 202 d.h. insbesondere für bi-statische oder mono-statische Messungen sowie als Sende- und/oder Empfangsantenne, ist folglich im Rahmen und unter Anwendung der Erfindung äußerst flexibel. Es sei darauf hingewiesen, dass auch Mischformen von horizontal und vertikal parallel zu den zwei planaren Strahlerelementen 206a, 206b angeordneten weiteren planaren Strahlerelemente im Rahmen der Erfindung liegen. Z.B. jeweils zwei horizontal und zwei vertikal parallel zu den zwei planaren Strahlerelementen 206a, 206b angeordnete weitere planare Strahlerelemente.

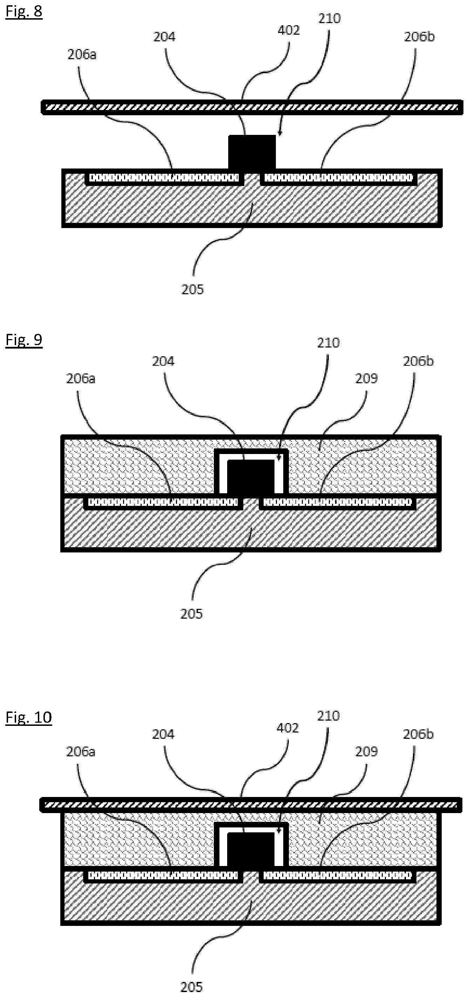

Fig. 8 skizziert im Querschnittsansicht eine weitere Ausführung einer Antenne gemäß der Erfindung, im dargestellten Beispiel einer Dipolantenne mit zwei im Trägersubstrat 205 eingebetteten Strahlerelementen 206a, 206b, wobei zusätzlich eine rückseitige Abschirmung 402, d.h. auf der vom sensorisch zu erfassenden Füllstandbereich abgewandten Seite, mitumfasst ist. Es hat sich hierbei als zweckmäßig gezeigt, wenn eine solche oder ähnliche Abschirmung 402 nicht mit der Ultrabreitband-Mikrowelleneinheit 201 verbunden ist. Ferner hat sich in ergänzender oder auch alternativer Weise zweckmäßig gezeigt, wenn die Abschirmung 402 durch die metallische Messzellenwand selbst oder durch einen metallischen Deckel der Ultrabreitband-Antenne 202 ausgebildet ist. Eine rückseitige Wellenausbreitung des Ultrabreitbandsignals kann somit auf einfache Weise vermieden, zumindest jedoch reduziert werden.

Wie ferner zu erkennen, ist die Abschirmung 402 also vom Trägersubstrat aus betrachtet zu der ersten Seite hin und zweckmäßig zum Trägersubstrat 205 beabstandet angeordnet. Wie dargestellt, kann zwischen der Abschirmung 402 und dem Trägersubstrat 205 hierbei zweckmäßig auch ein eingesetztes Anpassglied 204 angeordnet sein. Zwischen Abschirmung 402 und Trägersubstrat 205 ist folglich ferner in praktischer Ausführung eine Kaverne 210 vorhanden. Diese kann je nach Applikation z.B. auch mit einem geeigneten Gas (z. B. Luft) oder Vakuum gefüllt sein, insbesondere um weitere, jeweils gewünschte Dielektrizitätseigenschaften zur Verbesserung der Radarmessung zur Verfügung zu stellen.

Bei der in Fig. 9 in Querschnittsansicht skizzierten Ausführung einer Antenne gemäß der Erfindung, im dargestellten Beispiel einer Dipolantenne mit zwei im Trägersubstrat 205 eingebetteten Strahlerelementen 206a, 206b, ist in Abwandlung zur Fig. 8 insbesondere benachbart zum Trägersubstrat 205 und zur ersten Seite gerichteten ersten Oberfläche hin eine Schutzschicht 209 angeordnet, die zweckmäßig durch eine nichtleitfähige Schicht, insbesondere zur Abdeckung, und/oder durch eine Absorberschicht ausgebildet ist. Auch mit wenigstens einer solchen zur Abdeckung und/oder Absorption ausgebildeten Schutzschicht lassen sich somit auf einfache Weise zusätzliche Reflexionen an rückseitigen Schichten, insbesondere auch massegeerdeten Schichten vermeiden. Als eine solche Schutzschicht 209 hat sich z.B. auch ein breitbandiges HF-Material in Form einer Folie oder eines Schaums als besonders zweckmäßig gezeigt. Wie dargestellt, kann hierbei ein im Rahmen der Erfindung eingesetztes Anpassglied 204 in die Schutzschicht 209 eingebettet sein und/oder innerhalb einer in der Schutzschicht 209 ausgebildeten Kaverne 210 eingesetzt sein. Im letzteren Fall kann ein vorhandener Freiraum in der Kaverne 210 zwischen Anpassglied 204 und Schutzschicht 209, je nach Applikation z.B. auch wieder mit einem geeigneten Gas (z. B. Luft) oder Vakuum gefüllt sein.

Bei der in Fig. 10 in Querschnittsansicht skizzierten Ausführung ist eine Mischform aus den in den Fign. 8 und 9 skizzierten Ausführungen gezeigt.

Von Vorteil ist, dass es sich bei den vorbeschriebenen Strahlerelementen 206a, 206b, 207a, 207b grundsätzlich um beliebige Formen handeln kann. Je nach Erfordernis bzw. applikationsspezifisch kann folglich für eine jeweils besonders geeignete Ausbildung eines jeweiligen durch die Strahlerelemente aufgebauten Flächendipols auf eine Vielzahl von möglichen Antennenstrukturen zurückgegriffen werden. Bewährt haben sich Strahlerelemente im Rahmen der Erfindung beispielsweise zum Ausbilden von Kreis-, Ellipsen- und Ringstrukturen oder auch mit Schmetterlingsstrukturen, Fliegenstrukturen, d.h. "Bow Tie"-Strukturen, und sogenannten Batwing-Strukturen. Auch hat sich ferner als besonders zweckmäßig erwiesen, wenn die Ultrabreitband-Mikrowelleneinheit für ein kontinuierlich-periodisches Signal als Ultrabreitbandsignal eingerichtet ist, wobei sich als besonders zweckmäßig ein ultrabreitbandiges M-Sequenzsignal gezeigt hat.

Unter Würdigung vorstehender Beschreibung kann somit zusammenfassend festgehalten werden, dass mit der Erfindung ein industrietaugliches Sensorsystem zur Präsenzerkennung von Füllgütern in kleinen und/oder kompliziert-strukturierten Messzellen, insbesondere Behältern, insbesondere zur Leererkennung, zur Füllstandmessung und zur Volumenbestimmung von Füllgütern geschaffen ist.

Durch die berührungslose volumenhafte Erfassung des Füllstandbereichs und der Präsenz des Füllgutes in geometrisch-komplizierten Volumen, z.B. auch innerhalb von metallischen oder nicht-metallischen Vorrats- und Prozessbehältern, in denen das Füllgut verschiedene Aggregatzustände und Formen annehmen kann, können gemäß Erfindung Totbereiche vermieden und also auch Messungen im Nahbereich der Antenne ermöglicht werden. Bei einem insgesamt kostengünstigen Aufbau sind dabei Messungen bis zum Behälterboden und bis in die Ecken von Behälter möglich.

Basierend auf dem System gemäß Erfindung können dann für die nachfolgende Signalauswertung und Datenanalyse betreffend die Präsenzerkennung und Berechnung der physikalischen Eigenschaften des Füllgutes, z.B. unter Nutzung einer zeitbasierten Impedanzsprung-Detektierung, eine Vielzahl digitaler Algorithmen eingesetzt werden, unter anderem auch unter Nutzung von KI (künstlicher Intelligenz) einschließlich maschinellen Lernens, einem Teilgebiet der künstlichen Intelligenz, bei welchem durch das Erkennen von Mustern in vorliegenden Datenbeständen ein System in die Lage versetzt wird, eigenständige Analysen und Problemlösungen zu bewirken., zur Präsenzerkennung Berechnung der physikalischen Eigenschaften des Füllgutes

Die im Rahmen der Erfindung eingerichteten Ultrabreitband-Antennen weisen eine hohe dispersive/ungerichtete Strahlungscharakteristik auf bzw. besitzen derartige Feldausbreitungseigenschaften. Die Ausbreitung des hierbei unter Nutzung der Ultrabreitbandsignale erzeugten elektromagnetischen Feldes erfolgt kugelförmig, zumindest halbkugelförmig und also volumenförmig in die Messzelle, insbesondere Behälter, d.h. ähnlich wie bei einem kapazitiven Näherungssensor, nicht-direkt in Richtung des Füllgutes. Es können hierbei auch Mehrfachreflexion an metallischen Wänden und Einbauten auftreten, welches selbstverständlich entsprechend auch berücksichtigt werden muss.

Die gemäß der Erfindung anstelle von Patchantennen vorgeschlagenen Dipolstrukturen können wesentlich komplexer ausgestaltet werden und sich unter Verwendung einer Mehrlagen-Leiterplatte auch in Richtung des Messzellenraums, d.h. des sensorisch zu erfassenden Füllstandbereichs erstrecken. Auch können sie gänzlich in das Trägersubstrat, z.B. in eine Mehrlagen-Platine, eingebettet sein, welches insbesondere auch über eine vertikale Integrationstechnik erfolgen kann; auch ein eingesetztes Anpassglied kann hierbei mit eingebettet werden.

### Bezugszeichenliste

- 100: Füllstandradar mit bündelnden Antennen
- 101: Mikrowellenelektronik
- 102: Bündelnde Antenne
- 103: Massefläche bzw. Reflektorschicht
- 104: Hochfrequenzanschluss

- 200: Messsystem gemäß Erfindung
- 201: Ultrabreitband-Mikrowelleneinheit
- 202: Ultrabreitband-Antenne
- 203: Hochfrequenzanschluss
- 204: Anpassglied
- 205: Trägersubstrat
- 206: Strahlerelement des Flächendipols
- 207: Strahlerelement eines weiteren Flächendipols
- 209: Schutzschicht
- 210: Kaverne
- 212: n-te Ultrabreitband-Antenne

- 300: Behälter
- 301: Behälterwand

- 400: Messzelle, insbesondere in Art eines beliebig-strukturierter Behälter
- 401: Messzellenwand, insbesondere ausgebildet durch die Behälterwand
- 402: Abschirmung
- 403: Geschirmter Bereich

- 500: Füllgut
- 501: Füllgutoberfläche
- 502: dielektrischer Körper oder Stoff
- 503: n-ter dielektrischer Körper oder Stoff
- 504: Oberfläche eines Körpers oder Stoffs

- 600: Gebündeltes Messfeld
- 601: Richtkeule
- 602: Sendesignal
- 603: Empfangssignal

- 700: Volumenhaftes Messfeld
- 702: Sendesignal
- 703: Empfangssignal
- 704: reflektiertes Sendesignal
- 705: reflektiertes Empfangssignal

## Patentansprüche

1. System umfassend:
- eine Ultrabreitband-Mikrowelleneinheit (201), und
- wenigstens eine Ultrabreitband Antenne (202) mit wenigstens einem scheibenförmigen Trägersubstrat (205) mit einer zu einer ersten Seite gerichteten ersten Oberfläche und einer entgegengesetzt zur ersten Oberfläche gerichteten zweiten Oberfläche,
welche eine Außenseite der Antenne bildet,
**dadurch gekennzeichnet, dass** das System ferner
- eine Messzelle (400), insbesondere in Art eines Behälters, mit einer leitfähigen und/oder nichtleitfähigen Messzellenwand (401), die eine in einen Innenraum der Messzelle gerichtete Oberfläche aufweist, umfasst, und
- zur Erkennung und/oder Volumenbestimmung von Körpern oder Stoffen aus dielektrischem und/oder leitfähigen Material (500, 502, 503, 504) innerhalb des Innenraums der Messzelle derart konfiguriert ist, dass das Trägersubtrat (205)
a) in die Messzellenwand (401) eingebaut ist und einen Teil der in den Innenraum der Messzelle (400) gerichteten Oberfläche der Messzellenwand (401) ersetzt, oder
b) im Innenraum der Messzelle (400) beabstandet von der Messzellenwand (401) angeordnet ist,
wobei die Ultrabreitband-Antenne mittels-an der ersten Oberfläche des Trägersubstrats oder im Trägersubstrat angeordneten Strahlerelementen als eine elektrisch kurze Antenne mit einer zumindest im Wesentlichen halbkugelförmigen Strahlungscharakteristik eingerichtet ist, zum Abdecken eines, sich von der Außenseite erstreckenden volumenhaften Messfeldes (700) über einen Raumwinkel von wenigstens 2π.

2. System nach Anspruch 1, wobei
- am oder im Trägersubstrat zwei planare Strahlerelemente (206a, 206b) angeordnet sind, die sich im Wesentlichen parallel zum Trägersubstrat erstreckend von diesem in einer gemeinsamen Ebene gehalten sind und zusammen einen Flächendipol ausbilden, und
- ein mit den Strahlerelementen (206a, 206b) verbundener Hochfrequenzanschluss (203), mit welchem auch die Ultrabreitband-Mikrowelleneinheit (201) verbundenen ist, zum leitungsgebundenen Übertragen eines Ultrabreitbandsignals zwischen den Strahlerelementen und der Ultrabreitband-Mikrowelleneinheit (201),

3. System nach Anspruch 2, wobei horizontal und/oder vertikal parallel zu den zwei planaren Strahlerelementen (206a, 206b) wenigstens zwei weitere planare Strahlerelemente (207a, 207b) umfasst sind, wobei jeweils zwei dieser wenigstens zwei weiteren planaren Strahlerelemente sich im Wesentlichen parallel zum Trägersubstrat erstreckend von diesem in jeweils einer gemeinsamen Ebene zueinander gehalten sind und zusammen einen Flächendipol ausbilden.

4. System nach Anspruch 3, wobei mit den jeweils zwei weiteren, einen Flächendipol ausbildenden Strahlerelementen ein Hochfrequenzanschluss (203) zum leitungsgebundenen Übertragen eines Ultrabreitbandsignals zwischen diesen Strahlerelementen und der auch mit diesem Hochfrequenzanschluss verbundenen Ultrabreitband-Mikrowelleneinheit (201) verbunden ist.

5. System nach einem der vorstehenden Ansprüche, wobei jeder Hochfrequenzanschluss jeweils über ein Anpassglied (204), insbesondere zur Impedanzwandlung, mit den jeweils einen Flächendipol ausbildenden Strahlerelementen verbunden ist.

6. System nach einem der vorstehenden Ansprüche, wobei die Ultrabreitband-Antenne (202) eine vom Trägersubstrat aus betrachtet zu der ersten Seite hin und zum Trägersubstrat (205) beabstandet angeordnete Abschirmung (402) umfasst.

7. System nach vorstehendem Anspruch, wobei die Abschirmung (402) nicht mit der Ultrabreitband-Mikrowelleneinheit (201) verbunden ist und/oder wobei die Abschirmung (402) durch die metallische Messzellenwand oder einen Deckel der Ultrabreitband-Antenne (202) ausgebildet ist.

8. System zumindest nach vorstehenden Ansprüchen 5 und 6, wobei das Anpassglied (204) zwischen der Abschirmung und dem Trägersubstrat angeordnet ist.

9. System nach einem der vorstehenden Ansprüche, wobei benachbart zum Trägersubstrat zur ersten Seite gerichteten ersten Oberfläche hin als Schutzschicht (209) eine nicht-leitfähige und/oder Absorberschicht angeordnet ist.

10. System zumindest nach vorstehendem Anspruch 5 und 9, wobei das Anpassglied (204) in die Schutzschicht (209) eingebettet ist.

11. System nach einem der vorstehenden Ansprüche, wobei von der Ultrabreitband-Mikrowelleneinheit für den Einsatz eines kontinuierlich-periodisches Signals als Ultrabreitbandsignal eingerichtet ist.

12. System nach einem der vorstehenden Ansprüche, wobei die Ultrabreitband-Mikrowelleneinheit ein Sendemodul umfasst zum Generieren eines Ultrabreitbandsignals.

13. System nach einem der vorstehenden Ansprüche, wobei die Ultrabreitband-Mikrowelleneinheit ein Auswertemodul umfasst zum Auswerten eines empfangenen Ultrabreitbandsignals.

14. System nach einem der vorstehenden Ansprüche, wobei wenigstens eine weitere Ultrabreitband-Antenne (212) mit den Merkmalen gemäß einem der vorstehenden Ansprüche 1 bis 6 eingerichtet ist, wobei die Ultrabreitband-Antenne (212) zumindest mit einem Auswertemodul zum Auswerten eines empfangenen Ultrabreitbandsignals verbunden ist

15. System nach einem der vorstehenden Ansprüche, wobei das Trägersubstrat eine mehrlagige Platine ist, und/oder die Strahlerelemente in das Trägersubstrat eingebettet sind.

## Claims

1. System comprising:
- an ultra-broadband microwave unit (201), and
at least one ultra-broadband antenna (202) with at least one disk-shaped carrier substrate (205) which has a first surface facing a first side and a second surface which is opposed to the first surface and forms an outer side of the antenna,
**characterized in that** the system further
- comprises a measuring cell (400), in particular in the form of a container, with a conductive and/or non-conductive measuring cell wall (401), which has a surface directed into an interior of the measuring cell, and
- is configured for detecting and/or determining the volume of bodies or substances made of dielectric and/or conductive material (500, 502, 503, 504) within the interior of the measuring cell in such a way that the carrier substrate (205)
a) is built into the measuring cell wall (401) and replaces a part of the surface of the measuring cell wall (401) directed into the interior of the measuring cell (400), or
b) is arranged in the interior of the measuring cell (400) at a distance from the measuring cell wall (401),
wherein the ultra-broadband antenna is set up as an electrically short antenna with an at least substantially hemispherical radiation characteristic by means of radiator elements arranged on the first surface of the carrier substrate or in the carrier substrate, for covering a volumetric measuring field (700) extending from the outside over a solid angle of at least 2π.

2. System of claim 1, wherein
- two planar radiator elements (206a, 206b) are arranged on or in the carrier substrate, which are held in a common plane, extending substantially parallel to the carrier Substrate and together form a surface dipole, and
- a high-frequency terminal (203) connected to the radiator elements (206a, 206b), to which the ultra-broadband microwave unit (201) is also connected, for the wired trans- mission of an ultra-broadband signal between the radiator elements and the ultra-broadband microwave unit (201),

3. System of claim 2, wherein horizontally and/or vertically parallel to the two planar radiator elements (206a, 206b) at least two further planar radiator elements (207a, 207b) are included, wherein in each case two of these at least two further planar radiator elements extending substantially parallel to the carrier substrate are held by the latter in each case in a common plane relative to one another and together form a surface dipole.

4. System of claim 3, wherein a high-frequency terminal (203) is connected to each of the two further radiator elements forming a surface dipole for the wired transmission of an ultra-broadband signal between these radiator elements and the ultra-broadband microwave unit (201) also connected to this high-frequency terminal.

5. System according to any one of the preceding claims, wherein each high-frequency terminal is connected via a matching element (204), in particular for impedance conversion, to the radiator elements each forming a surface dipole.

6. The system according to any one of the preceding claims, wherein the ultra-broadband antenna (202) comprises a shield (402) arranged spaced from the carrier substrate and towards the carrier substrate (205) as viewed towards the first side.

7. System according to the preceding claim, wherein the shield (402) is not connected to the ultra-broadband microwave unit (201) and/or wherein the shield (402) is formed by the metallic measuring cell wall or a cover of the ultra-broadband antenna (202).

8. System according to at least the preceding claims 5 and 6, wherein
the matching element (204) is arranged between the shield and the carrier substrate.

9. System according to any one of the preceding claims, wherein a non-conductive and/or absorber layer is arranged as a protective layer (209) adjacent to the carrier substrate on the first surface directed towards the first side.

10. System according to at least the preceding claims 5 and 9, wherein the matching element (204) is embedded in the protective layer (209).

11. System according to any one of the preceding claims, wherein the ultra-broadband microwave unit is adapted to use a continuous-periodic signal as the ultra-broadband signal.

12. System according to any one of the preceding claims, wherein the ultra-broadband microwave unit comprises a transmitter module for generating an ultra-broadband signal.

13. System according to any one of the preceding claims, wherein the ultra-broadband microwave unit comprises an evaluation module for evaluating a received ultra-broadband signal.

14. System according to any one of the preceding claims, wherein at least one further ultra-broadband antenna (212) is set up with the features according to any one of the preceding claims 1 to 6, wherein the ultra-broadband antenna (212) is connected at least to an evaluation module for evaluating a received ultra-broadband signal.

15. System according to any one of the preceding claims, wherein the carrier substrate is a multilayer circuit board and/or the radiator elements are embedded in the carrier substrate.

## Revendications

1. Système comprenant :
- une unité micro-ondes ultra-large bande (201), et
- au moins une antenne ultra-large bande (202) comportant au moins un substrat porteur (205) en forme de disque comportant une première surface dirigée vers un premier côté et une seconde surface dirigée à l'opposé de la première surface,
laquelle forme un côté extérieur de l'antenne,
**caractérisé en ce que** le système comprend en outre
- une cellule de mesure (400), en particulier sous forme d'un récipient, comportant une paroi (401) de cellule de mesure conductrice et/ou non conductrice, laquelle comporte une surface dirigée vers un espace intérieur de la cellule de mesure, et
- est conçue pour détecter et/ou pour déterminer le volume de corps ou de substances en matière diélectrique et/ou conductrice (500, 502, 503, 504) à l'intérieur de l'espace intérieur de la cellule de mesure de telle sorte que le substrat porteur (205)
a) est monté dans la paroi (401) de cellule de mesure et remplace une partie de la surface de la paroi (401) de cellule de mesure dirigée vers l'espace intérieur de la cellule de mesure (400), ou
b) est agencé dans l'espace intérieur de la cellule de mesure (400) à distance de la paroi (401) de cellule de mesure,
dans lequel l'antenne ultra-large bande est conçue,au moyen des éléments rayonnants agencés sur la première surface du substrat porteur ou dans le substrat porteur; sous la forme d'une antenne électriquement courte présentant une caractéristique de rayonnement au moins sensiblement hémisphérique pour couvrir un champ de mesure (700 ) volumétrique s'étendant depuis le côté extérieur sur un angle solide d'au moins 2π.

2. Système selon la revendication 1, dans lequel
- sur ou dans le substrat porteur sont agencés deux éléments rayonnants (206a, 206b) plans , lesquels s'étendent essentiellement parallèlement au substrat porteur et sont maintenus par celui-ci dans un plan commun et forment ensemble un dipôle de surface, et
- une connexion haute fréquence (203) connectée aux éléments rayonnants (206a, 206b), à laquelle l'unité micro-ondes ultra-large bande (201) est également connectée, pour permettre la transmission filaire d'un signal ultra-large bande entre les éléments rayonnants et l'unité micro-ondes ultra-large bande (201),

3. Système selon la revendication 2, dans lequel, horizontalement et/ou verticalement, parallèlement aux deux éléments rayonnants (206a, 206b) plans, au moins deux autres éléments rayonnants (207a, 207b) plans sont compris, dans lequel respectivement deux desdits au moins deux autres éléments rayonnants plans s'étendant essentiellement parallèlement au substrat porteur sont maintenus par celui-ci dans respectivement un plan commun l'un par rapport à l'autre et forment ensemble un dipôle de surface.

4. Système selon la revendication 3, dans lequel une connexion haute fréquence (203) permettant la transmission filaire d'un signal ultra-large bande est connectée aux respectivement deux autres éléments rayonnants formant un dipôle de surface, entre lesdits éléments rayonnants et l'unité micro-ondes ultra-large bande (201) également connectée à ladite connexion haute fréquence.

5. Système selon l'une quelconque des revendications précédentes, dans lequel chaque connexion haute fréquence est connectée respectivement aux éléments rayonnants formant respectivement un dipôle de surface par l'intermédiaire d'un organe d'adaptation (204), en particulier pour permettre la conversion d'impédance.

6. Système selon l'une quelconque des revendications précédentes, dans lequel l'antenne ultra-large bande (202) comprend, vu vers le premier côté et par rapport au substrat porteur (205), un blindage (402) agencé espacé du substrat porteur.

7. Système selon la revendication précédente, dans lequel le blindage (402) n'est pas connecté à l'unité micro-ondes à ultra-large bande (201) et/ou dans lequel le blindage (402) est formé par la paroi de cellule de mesure métallique ou un couvercle de l'antenne ultra-large bande (202).

8. Système selon au moins les revendications précédentes 5 et 6, dans lequel l'organe d'adaptation (204) est agencé entre le blindage et le substrat porteur.

9. Système selon l'une quelconque des revendications précédentes, dans lequel une couche non conductrice et/ou absorbante est agencée en tant que couche de protection (209) adjacente au substrat porteur en direction de la première surface tournée vers le premier côté.

10. Système selon au moins les revendications précédentes 5 et 9, dans lequel l'organe d'adaptation (204) est incorporé dans la couche de protection (209).

11. Système selon l'une quelconque des revendications précédentes, dans lequel l'unité micro-ondes ultra-large bande est conçue pour utiliser un signal périodique continu comme signal ultra-large bande.

12. Système selon l'une quelconque des revendications précédentes, dans lequel l'unité micro-ondes ultra-large bande comprend un module émetteur permettant la génération d'un signal ultra-large bande.

13. Système selon l'une quelconque des revendications précédentes, dans lequel l'unité micro-ondes ultra-large bande comprend un module évaluateur permettant l'évaluation du signal ultra-large bande reçu.

14. Système selon l'une quelconque des revendications précédentes, dans lequel au moins une autre antenne ultra-large bande (212) est conçue de manière à présenter les caractéristiques selon l'une quelconque des revendications précédentes 1 à 6, dans lequel l'antenne ultra-large bande (212) est connectée à l'au moins un module évaluateur permettant l'évaluation d'un signal ultra-large bande reçu.

15. Système selon l'une quelconque des revendications précédentes, dans lequel le substrat porteur est une carte de circuit imprimé multicouche et/ou les éléments rayonnants sont incorporés dans le substrat porteur.
